# EUROPEAN PATENT APPLICATION

(11) **EP 3 832 489 A1**
(43) Date of publication of application: **09.06.2021**
(21) Application number: 18928194.2
(22) Date of filing: 31.07.2018
(51) Int. Cl.: G06F 16/44

(54) **FILE BROWSING METHOD, ELECTRONIC DEVICE AND MACHINE READABLE STORAGE MEDIUM**

(71) Applicant: SZ DJI Technology Co., Ltd., Shenzhen, Guangdong 518057 (CN)
(72) Inventor: TAO, Ye, Shenzhen, Guangdong 518057 (CN); LI, Zhuojia, Shenzhen, Guangdong 518057 (CN)
(74) Representative: Appelt, Christian W.
(86) International application number: PCT/CN2018/097785
(87) International publication number: WO 2020/024106

(57) **Abstract**

A file browsing method, an electronic device, and a machine-readable storage medium. The file browsing method includes: obtaining a first index list of files stored in an external device, and a second index list of files stored locally and related to the external device; processing the first index list and the second index list to obtain a third index list; and displaying files corresponding to respective file indexes in the third index list. So far, this embodiment can manage and browse the files stored locally and related to the external device in a unified manner, and can browse all files related to the external device, such that a user is not required to search files at different locations in the electronic device, it is facilitated to reduce time for searching files by the user, and file display experience of the user is improved.

## Description

### TECHNICAL FIELD

The present disclosure relates to the field of data processing technology and, more particularly, to a file browsing method, an electronic device, and a machine-readable storage medium.

### BACKGROUND

Because different devices have different preference performance, for example, a camera has a high-quality camera that can photograph high-quality images, and a smartphone can process images faster and display images more clearly. Therefore, the camera can be connected to the smartphone, to clearly browse files taken by the camera such as high-quality photos or video streams, etc., through the smartphone.

When the camera is connected to the smartphone, and a user browses the camera's files through the smartphone, the smartphone can pull the camera's file management system to obtain an index of each file of the camera, and download files such as thumbnails, original images, video streams, etc., based on the index to accomplish browsing. When the camera is disconnected from the smartphone, the user can browse files stored in the smartphone from the camera, or form videos based on the video streams in the stored files from the camera, or stitch and composite photos or panoramic photos based on multiple photos in the stored files from the camera. Since these videos and photos are composited by the smartphone, they are not stored in the camera, and are not included in the camera's file management system. When the user wants to simultaneously browse the camera's files, and files stored in the smartphone and related to the camera, such as processed videos and photos, or composited panoramic photos, etc., while the camera is connected to the smartphone, the user usually needs to search corresponding files at different storage locations in the smartphone. For a user who does not know file storage locations, time for retrieving files is longer, and use experience of the user is reduced.

### SUMMARY

Embodiments of the present disclosure provide a file browsing method, an electronic device, and a machine-readable storage medium.

In a first aspect, the embodiments of the present disclosure provide a file browsing method, applied to an electronic device, that the electronic device is connected to an external device, and the method includes:
obtaining a first index list of files stored in the external device, and a second index list of files stored locally and related to the external device;
processing the first index list and the second index list to obtain a third index list; and
displaying files corresponding to respective file indexes in the third index list.

In a second aspect, the embodiments of the present disclosure provide a file browsing method, applied to an electronic device, that the electronic device includes a display screen, and the method includes:
monitoring an operation of browsing files in an external device by a user;
when the operation is monitored, obtaining a first file group stored in the external device, and a second file group stored locally and related to the external device; and
simultaneously displaying the first file group and the second file group in one interface of the display screen.

In a third aspect, the embodiments of the present disclosure provide an electronic device, including a processor, a memory, and a communication bus. The memory stores a plurality of computer instructions and files related to an external device. The processor is connected to the memory through the communication bus, and is configured to read computer instructions from the memory to implement:
obtaining a first index list of files stored in the external device, and a second index list of files stored locally and related to the external device;
processing the first index list and the second index list to obtain a third index list; and
displaying files corresponding to respective file indexes in the third index list.

In a fourth aspect, the embodiments of the present disclosure provide an electronic device, including a processor, a memory, a display screen, and a communication bus. The memory stores a plurality of computer instructions and files related to an external device. The processor is connected respectively to the memory and the display screen through the communication bus, and is configured to read computer instructions from the memory to implement:
monitoring an operation of browsing files in the external device by a user;
when the operation is monitored, obtaining a first file group stored in the external device, and a second file group stored locally and related to the external device; and
simultaneously displaying the first file group and the second file group in one interface of the display screen.

In a fifth aspect, the embodiments of the present disclosure provide a machine-readable storage medium. The machine-readable storage medium stores a plurality of computer instructions and files related to a connected external device, and when the plurality of computer instructions are executed, steps of the methods described in the first aspect or the second aspect are implemented.

As can be seen from the above technical solutions, in the embodiments, a third index list can be obtained by processing a first index list of files stored in an external device and a second index list of files stored locally and related to the external device; and finally, files corresponding to respective file indexes in the third index list can be displayed, so that the files stored locally and related to the external device can be managed and browsed in a unified manner, and all files related to the external device can be browsed. Thus, a user is not required to search files at different locations in an electronic device, it is facilitated to reduce time for searching files by the user, and file display experience of the user is improved.

### BRIEF DESCRIPTION OF THE DRAWINGS

To more clearly illustrate technical solutions in the embodiments of the present disclosure, the accompanying drawings needed to be used in the embodiments will be briefly described below. It is obvious that the accompanying drawings in the following description are only some embodiments of the present disclosure. For those having ordinary skills in the art, other drawings can be obtained according to these accompanying drawings without inventive efforts.
FIG. 1 is a schematic diagram of an application scenario of a file browsing method according to the embodiments of the present disclosure;
FIG. 2 is a flowchart of a file browsing method according to the embodiments of the present disclosure;
FIG. 3 is a flowchart of obtaining a second index list according to the embodiments of the present disclosure;
FIG. 4 is a flowchart of obtaining a first index list according to the embodiments of the present disclosure;
FIG. 5 is another flowchart of obtaining a first index list according to the embodiments of the present disclosure;
FIG. 6 is another flowchart of a second index list according to the embodiments of the present disclosure;
FIG. 7 is a flowchart of a file browsing method according to the embodiments of the present disclosure;
FIG. 8 is another flowchart of a file browsing method according to the embodiments of the present disclosure;
FIG. 9A is a display effect diagram of an electronic device when an external device is not connected according to the embodiments of the present disclosure;
FIG. 9B to FIG. 9D are display effect diagrams of an electronic device in a process of connecting an external device according to the embodiments of the present disclosure;
FIG. 10 is another display effect diagram of an electronic device when an external device is connected according to the embodiments of the present disclosure;
FIG. 11 is a flowchart of merging a first file group and a second file group according to the embodiments of the present disclosure;
FIG. 12 is a display effect diagram after merging a first file group and a second file group according to the embodiments of the present disclosure;
FIG. 13 is a flowchart after merging same files in a first file group and a second file group according to the embodiments of the present disclosure;
FIG. 14A to FIG. 14C are display effect diagrams of a process of merging same files in a first file group and a second file group according to the embodiments of the present disclosure;
FIG. 15 is a flowchart of co-displaying a first file group and a second file group according to the embodiments of the present disclosure;
FIG. 16 is a display effect diagram of co-displaying a first file group and a second file group according to the embodiments of the present disclosure;
FIG. 17 is another flowchart of co-displaying a first file group and a second file group according to the embodiments of the present disclosure;
FIG. 18 is another flowchart of co-displaying a first file group and a second file group according to the embodiments of the present disclosure;
FIG. 19 is a display effect diagram of displaying display features according to the embodiments of the present disclosure; and
FIG. 20 is a block diagram of an electronic device according to the embodiments of the present disclosure.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. On the basis of the embodiments of the present disclosure, all other embodiments obtained by those having ordinary skills in the art without inventive efforts should fall within the protection scope of the present disclosure.

Because different devices have different preference performance, for example, a camera has a high-quality camera that can photograph high-quality images, and a smartphone can process images faster and display images more clearly. Therefore, the camera can be connected to the smartphone, to clearly browse files taken by the camera such as high-quality photos or video streams, etc., through the smartphone.

In practical applications, a user can connect the camera to the smartphone, and browse files in the camera through the smartphone. During a connecting process, the smartphone can pull the camera's file management system, obtain an index of each file in the camera, and download files such as thumbnails, original images, video streams, etc., based on the index to accomplish browsing. When the camera is disconnected from the smartphone, the user can browse the files stored in the smartphone from the camera, or form videos based on the video streams in the stored files from the camera, or stitch and composite photos or panoramic photos based on multiple photos in the stored files from the camera. Since these videos and photos are composited by the smartphone, they are not stored in the camera, and of course are not included in the camera's file management system.

If the user wants to simultaneously browse the files in the camera, and the files stored in the smartphone and related to the camera, such as processed videos and photos, or composited panoramic photos, etc., when the camera is connected to the smartphone, the user needs to search corresponding files at different storage locations in the smartphone. For a user who does not know file storage locations, the time for retrieving files is longer, and the use experience of the user is reduced.

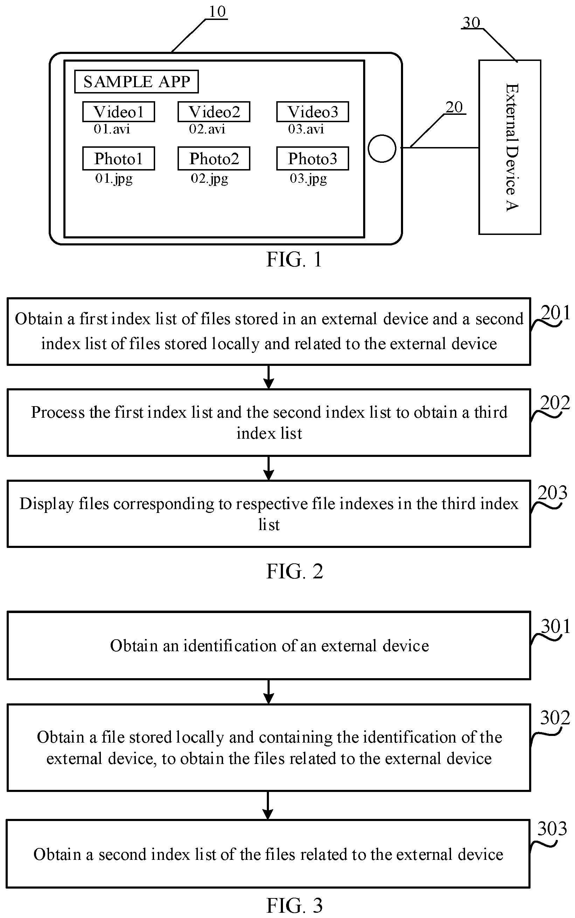

With regards to this, the embodiments of the present disclosure provide a file browsing method. FIG. 1 is a schematic diagram of an application scenario of a file browsing method according to the embodiments of the present disclosure. Referring to FIG. 1, an external device 10 (such as a handheld gimbal, a webcam, a camera, etc.) maintains a communication state with an electronic device 30 (such as a smartphone, a tablet computer, etc.) through a communication connection 20. The communication connection 20 may be wired or wireless (WiFi, Bluetooth, etc.). In this embodiment, the external device 10 may store files, and the files at least include multimedia files. For example, the multimedia files may include videos or images. The electronic device 30 can obtain the files in the external device and store them in local, and files previously from the external device can also be stored locally. Then the electronic device 30 can execute a file browsing method to display the files stored in the external device and the files stored locally and related to the external device in one same interface, so as to achieve effect of unified management and unified display.

FIG. 2 is a schematic flowchart of a file browsing method according to the embodiments of the present disclosure. Referring to FIG. 2, a file browsing method includes steps 201 to 203, in which:
in 201, a first index list of files stored in an external device is obtained, and a second index list of files stored locally and related to the external device is obtained.

In one embodiment, if a number of the external device is one, after monitoring a connection with the external device, the electronic device can obtain the first index list of the files in the external device according to configuration information. For example, after the electronic device has monitored operations of browsing the files in the external device by a user, a file system of the external device is pulled, and then the first index list of the files in the external device can be obtained. For another example, after the electronic device has detected that a connection with the external device is established, the file system of the external device is directly pulled, and then the first index list of the files in the external device can be obtained.

In which, the configuration information may include obtaining an index list based on operations by the user, or obtaining the index list right after the electronic device establishes a connection with outside.

In practical applications, the external device can be connected to the electronic device. In this case, the external device and the electronic device interact with each other, to download the files in the external device to be stored in the electronic device. When the files of the external device are stored in the electronic device, identification information of the external device is also stored, to identify that the files are obtained from the external device. In some cases, the identification information of the external device of the files in the electronic device can be used to distinguish local files in the electronic device (for example, when the electronic device is a mobile phone, photos taken by the mobile phone itself) and the files stored from the external device, and can also be used to distinguish stored files from different external devices. In addition, the user can also perform editing and reprocessing when browsing the files from the external device, such as skin beautification, styling adjustment, background adjustment or contrast adjustment, etc., to obtain edited files such as videos or photos, etc. The edited files are also files related to the external device.

In this embodiment, the electronic device may also obtain a second index list of files stored locally and related to the external device. Referring to FIG. 3, the electronic device can obtain an identification of the external device (corresponding to step 301), that the identification of the external device can be an identification to uniquely identify the external device, such as a device name, a device unique identification code, a device MAC, or a serial number assigned to the external device by the electronic device, etc. Then, the electronic device matches the files stored locally according to the identification of the external device, and can obtain a file stored locally and containing the identification of the external device, that is, obtain the files related to the external device (corresponding to step 302). Finally, the electronic device can obtain the second index list of the files related to the external device (corresponding to step 303).

It should be noted that the first index list and the second index list include file information of each file, that the file information includes one or more of following parameters: external device file index, file creation time, playback frame rate, video duration, video resolution, external device file unique identification code GUID (i.e., Globally Unique Identifier), external device photo mode, external device photo group index, and video type. Technicians can adjust the parameters included in the file information according to specific scenarios, which are not limited in the present disclosure.

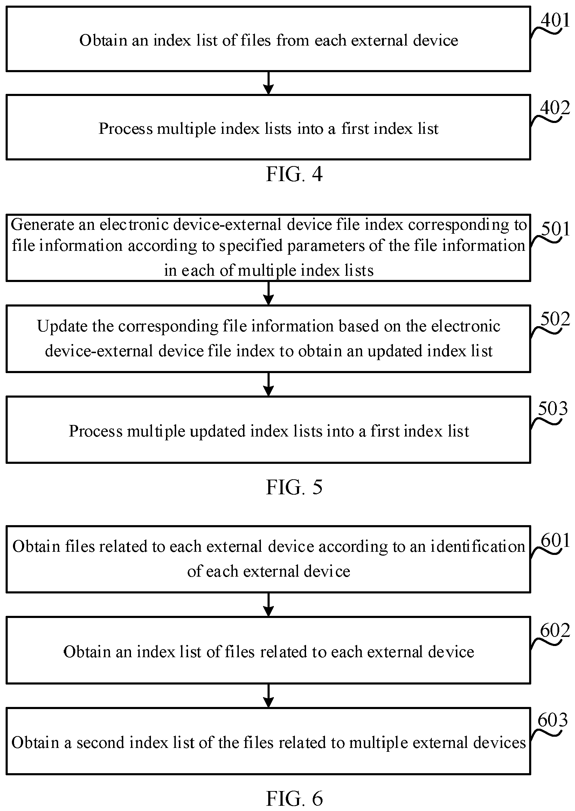

In another embodiment, if the number of the external device is more than one, as shown in FIG. 4, the electronic device pulls a file system of each external device separately, and then obtains an index list of files from each external device (corresponding to step 401), and then processes multiple index lists into the first index list (corresponding to step 402). In which, processing methods can include:
Method 1: the multiple index lists of the external device are listed directly into one index list. That is, file indexes in each index list are listed after file indexes of another index list, and so on, until the multiple index lists are all listed in the one index list, and the first index list can be obtained. In this embodiment, by listing file indexes in the first index list and the second index list, the processing method can be simplified, and a processing speed can be improved.
Method 2: all file indexes in the multiple index lists are sorted based on one of specified parameters in the file information of the multiple index lists, and the sorted file indexes are copied to one index list to obtain the first index list. The specified parameters can be file creation time, file modification time, file name, or file size, and can be set according to specific scenarios. In this embodiment, sorting file indexes by specified parameters can meet browsing needs of different users, and improve browsing experience.

It is understandable that the multiple external devices may include devices of a same type, and naming rules of the devices of the same type are the same, so same file information may exist in an index list. For this reason, the processing of the first index list in this embodiment may also include Method 3:
Referring to FIG. 5, the electronic device generates an electronic device-external device file index corresponding to file information according to specified parameters of the file information in each of the multiple index lists (corresponding to step 501). In one embodiment, generating the electronic device-external device file index can be a preset hash algorithm. For example, a hash algorithm can use one or more parameters in the file information, and a random number, as input parameters, then to generate a hash value, and output the hash value as the electronic device-external device file index. In which, the file information can include one or more of following parameters: external device file index, file creation time, playback frame rate, video duration, video resolution, external device file GUID, external device photo mode, external device photo group index, and video type. Then, the electronic device updates the corresponding file information based on the electronic device-external device file index to obtain an updated index list (corresponding to step 502). In addition to the electronic device-external device file index, the updated file information can also include one or more of following parameters: external device file index, file creation time, playback frame rate, video duration, video resolution, external device file GUID, external device photo mode, external device photo group index, and video type. Finally, the electronic device merges multiple updated index lists into the first index list (corresponding to step 503).

Same as the scenario where only one external device is connected, if the electronic device is connected to multiple external devices, the electronic device can store files downloaded from each external device and files related to each external device. Referring to FIG. 6, the electronic device can obtain an identification of each external device, and obtain the files related to each external device according to the identification of each external device (corresponding to step 601). After that, the electronic device can obtain an index list of files related to each external device (corresponding to step 602), and then, based on the method by which the first index list is obtained with multiple external devices, can obtain the second index list of the files related to the multiple external devices (corresponding to step 603).

It is understandable that the electronic device can also update the file information in the index list of the files related to each external device according to a preset hash algorithm. Updating content of a part related to the first index list can be referred to and will not be repeated here.

In 202, the first index list and the second index list are processed to obtain a third index list.

In this embodiment, the electronic device can process the first index list and the second index list into one index list, that is, the third index list, according to preset processing methods. The processing methods can include:
Method 1: file indexes in the first index list and the second index list are directly listed into an index list, that is, after listing file indexes in the first index list into the index list, a first file index in the second index list is continuously listed after a last file index, and so on, until all the file indexes in the first index list and the second index list are listed in the index list, and the third index list can be obtained. In this embodiment, by listing the file indexes in the first index list and the second index list, the processing method can be simplified, and the processing speed can be improved.
Method 2: all the file indexes in the first index list and the second index list are sorted based on one of specified parameters in the file information, and the sorted file indexes are copied to one index list to obtain the third index list. In which, the specified parameters can be file creation time, file modification time, file name, or file size, which can be set according to specific scenarios. In this embodiment, sorting the file indexes by specified parameters can meet the browsing needs of different users, and improve the browsing experience.

In 203, files corresponding to respective file indexes in the third index list are displayed.

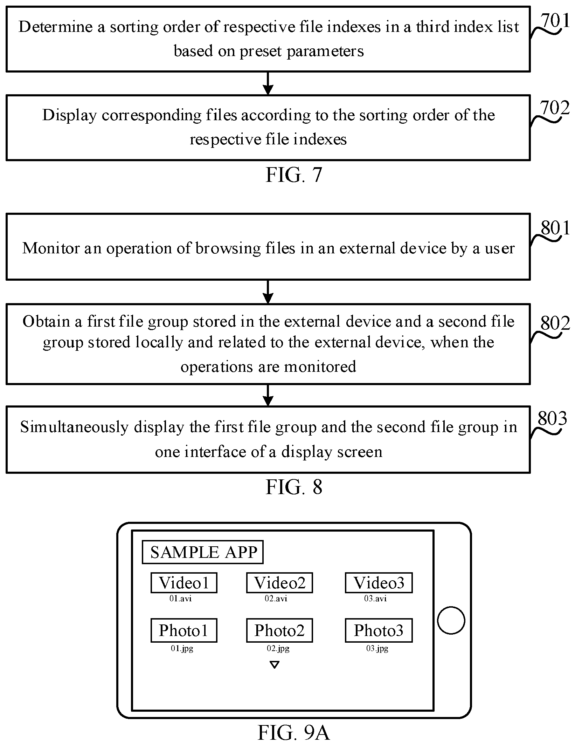

In this embodiment, the electronic device may display corresponding files based on sorting of file indexes in the third index list. In one embodiment, referring to FIG. 7, the electronic device may also determine the sorting order of the respective file indexes in the third index list based on preset parameters (corresponding to step 701), and then display the corresponding files according to the sorting order of the respective file indexes (corresponding to step 702). For example, the electronic device may sort based on the electronic device-external device file index generated by the hash algorithm, so as to obtain the sorting order of the respective file indexes in the third index list, and then display the corresponding files according to the sorting order of the file indexes.

In which, the preset parameters can be one or more of following parameters: external device file index, file creation time, playback frame rate, video duration, video resolution, external device file GUID, external device photo mode, external device photo group index, video type, and electronic device-external device file index. Technicians can configure types and a number of parameters according to specific scenarios, which are not limited here.

So far, in this embodiment, by processing the first index list of files stored in the external device and the second index list of files stored locally and related to the external device, the third index list can be obtained, and finally files corresponding to respective file indexes in the third index list are displayed, so that the files stored locally and related to the external device can be managed and browsed in a unified manner, and all files related to the external device can be browsed, such that a user is not required to search files at different locations in the electronic device, it is facilitated to reduce the time for searching files by the user, and the file display experience of the user is improved.

FIG. 8 is a schematic flowchart of a file browsing method according to the embodiments of the present disclosure. In which, an external device may be a handheld gimbal, a mobile phone, or a tablet computer, and an electronic device may be a mobile phone or a tablet computer. For ease of description, subsequent embodiments also take the external device and the electronic device as examples for description. Connections between the electronic device and the external device, and file storage modes, as well as file information and identification information of the external device in the subsequent embodiments have been specifically described in the foregoing, and will not be repeated here. Referring to FIG. 8, a file browsing method includes steps 801 to 803, in which:
in 801, operations of browsing files in the external device by a user are monitored.

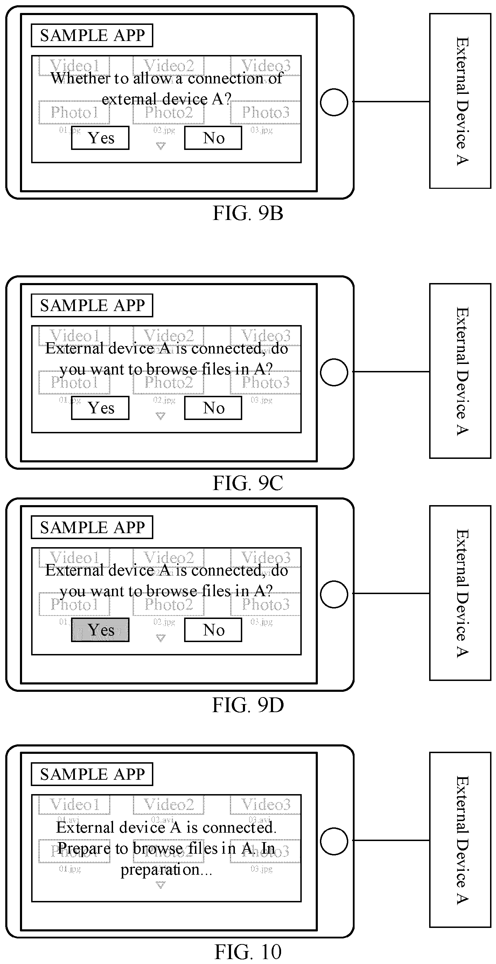

In this embodiment, the electronic device can monitor the operations of browsing files in the external device by the user. Referring to FIG. 9A to FIG. 9D, when the electronic device is not connected to the external device, the user can use a preset application software (for example, SAMPLE APP) to browse files stored locally, and browsing results are shown in FIG. 9A. When the external device A (A is the device's identification) is connected to the electronic device, the electronic device can pop up a dialog box, which can include following content "Whether to allow a connection of external device A, Yes or No". If the user selects "No", the browsing results of FIG. 9A can continue to be displayed. If the user selects "Yes", the electronic device can continue to pop up a dialog box shown in FIG. 9C, which can include following content "External device A is connected, do you want to browse files in A? Yes or No". If the user selects "No", the electronic device can continue to choose to display the browsing results in FIG. 9A, and can also receive files sent by the external device A, etc. Referring to FIG. 9D, if the user selects "Yes", the electronic device goes to step 802.

FIG. 9A to FIG. 9D show schematic diagrams of operations on the electronic device by the user. Of course, the user can also pre-configure relevant information on the electronic device. For example, when the external device is connected to the electronic device, it can be default that the user expects to browse files in the external device, that is, after monitoring the connection of the external device, that is, monitoring the operations of browsing the files in the external device by the user, referring to effect shown in FIG. 10.

In 802, when the operation is monitored, a first file group stored in the external device and a second file group stored locally and related to the external device are obtained.

In this embodiment, when the electronic device has monitored the operations of browsing files in the external device by the user, it interacts with the external device through a communication connection. At this time, the electronic device can pull a file system of the external device, and can obtain the first index list of files stored in the external device, based on the file system. Then, the electronic device can obtain the first file group based on the first index list. In which, the first file group may be all files stored in the external device, and may also be some files selected by the user. Also, a number of the first file group may be the same as the number of the external device, that is, the number of the first file group is equal to the number of the external device.

After that, the electronic device may also obtain files in local containing an identification, that is, the file related to the external device, according to the identification of the external device, to obtain the second index list. Then, the electronic device can obtain the second file group based on the second index list. In which, the second file group may be all files related to the external device, or may be some files selected by the user.

In which, a number of the second file group may be less than or equal to the number of the external device. For example, following configurations may exist in the electronic device:
Configuration scenario 1: if after each connection of the external device and the electronic device, the electronic device creates a file for the external device, which can be understood as a connection description file, including connection establish time, file creation time, connection network description, etc. Then, the electronic device determines whether to create other files according to whether the external device transmits its own files, so that the number of the second file group can be equal to the number of the external device.
Configuration scenario 2: if the external device is connected to the electronic device, the electronic device only creates files for the external device when the external device stores files, so the number of the second file group can be less than the number of the external device. If the external device transmits files every time, then the number of the second file group may be equal to the number of the external device. It is understandable that the number of the second file group does not affect implementation of the solutions of the present disclosure, and technicians can pre-configure the electronic device according to specific scenarios, which is not limited here.

In which, schemes of obtaining the first index list and the second index list can refer to schemes of the first index list and the second index list in step 201, which will not be repeated here.

In 803, the first file group and the second file group are simultaneously displayed in one interface of the display screen.

In one embodiment, the electronic device may co-display the first file group and the second file group in one display area of the one interface in the display screen. Co-displaying methods can include:
Method 1: merging and displaying, that merging means to merge same files into one file. The same files mean that two files have a same file name and contain same file features. In other words, two files are different, meaning that the two files have different file names, or the two files have a same file name but contain different file features. For example, in one case, a photo taken by the external device is stored on the external device to form a photo file 1, and imported and stored on the electronic device to form a photo file 2. When next time the electronic device is connected to the external device, and the user chooses to browse files on both devices, if the electronic device only stores the photo file 2 and does not change the file name of the photo file 2 or perform any photo editing, adjustment and other operations that change the file features, it can be considered that the photo file 1 and the photo file 2 are same files, and the two files are merged and displayed, that is, corresponding to only displaying one photo in the interface.

In which, the file features may include one or more of following parameters: file content, file creation time, modification operation, storage location, or device information. Of course, the file features can be adjusted according to parameters in the file information, and the solutions of the present disclosure can be implemented if whether two files are same files can be distinguished.

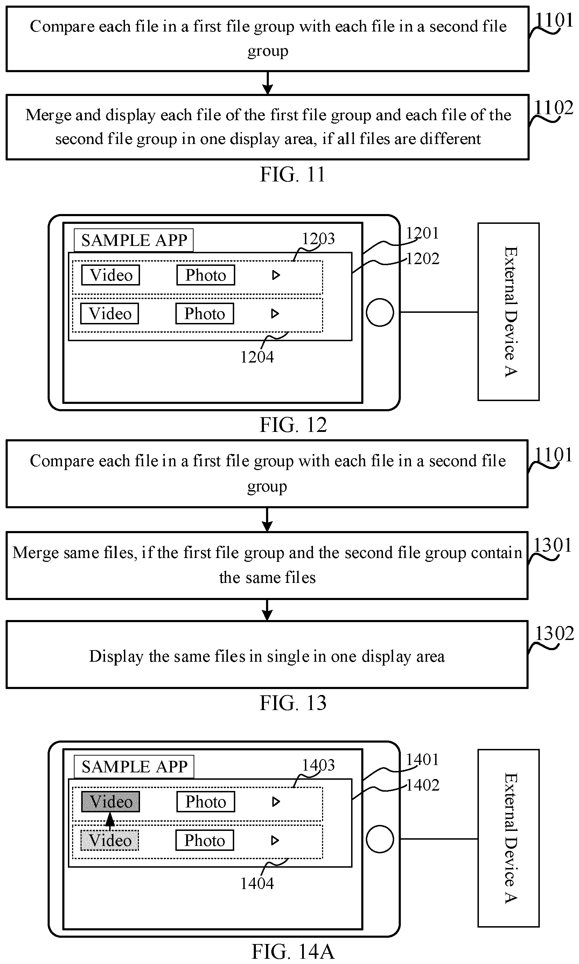

In this embodiment, the electronic device can determine whether files in the first file group and the second file group need to be merged, referring to FIG. 11, which includes: the electronic device compares each file in the first file group with each file in the second file group (corresponding to step 1101). If all files are different, the electronic device merges and displays each file of the first file group and each file of the second file group in one display area (corresponding to step 1102). Referring to FIG. 12, an interface 1201 is in the display screen of the electronic device, and a display area 1202 is in the interface 1201. A first file group 1203 and a second file group 1204 can be merged and displayed in the display area 1202. In which, the first file group 1203 includes videos, photos, and un-displayed files. The second file group 1204 includes videos, photos, and un-displayed files. It can be seen that, in this embodiment, the first file group and the second file group are merged and displayed, the user is not required to search each file group or file, the time for searching is reduced, and it is facilitated to improve browsing efficiency.

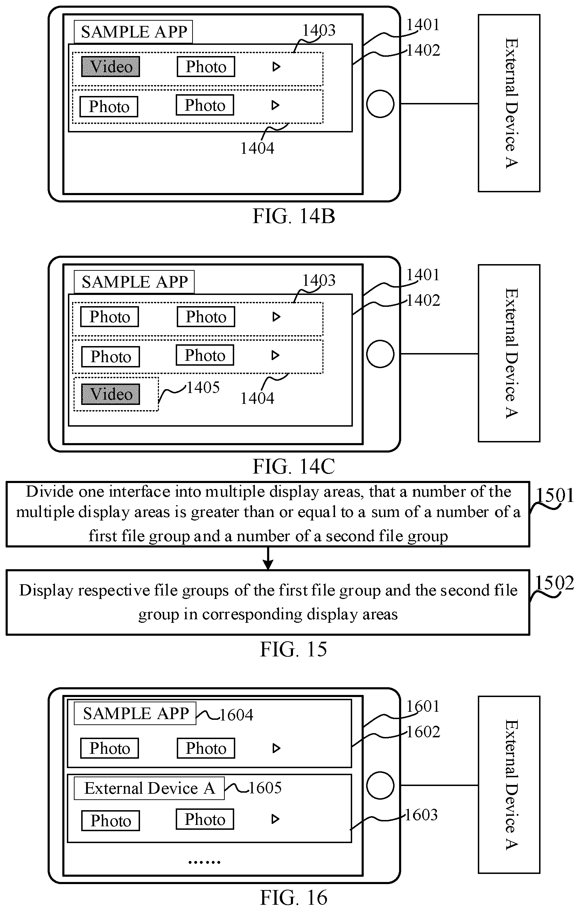

Referring to FIG. 13, after the electronic device compares each file in the first file group with each file in the second file group (corresponding to step 1101), if the first file group and the second file group contain same files (corresponding to step 1301), the same files are displayed in single in one display area (corresponding to step 1302). Referring to FIG. 14A, FIG. 14B, and FIG. 14C, after compared by the electronic device, a video file in the first file group and a video file in the second file group are determined to be same files. FIG. 14A has used gray and black background to identify the same video files. Continuing to refer to FIG. 14A, the electronic device merges the video file in the second file group (an arrow indicates a moving direction, and dotted lines indicate videos that need to be moved) into the video file (gray background) in the first file group. Then, the respective files in the first file group 1403 and the second file group 1404 are merged and displayed, and a browsing result shown in FIG. 14B is obtained. It can be seen that by merging the same files in this embodiment, the user can avoid repeatedly browsing the same files, and it is facilitated to improve the browsing efficiency.

In one embodiment, the electronic device may display the merged video file in single in the display area 1202, in a display position that is different from a position of the first file group 1403 and a position of the second file group 1404. For example, the merged video file can be set in a new line after the second file group 1404 to get a result shown in FIG. 14C. It can be seen that by displaying the same files in single, in this embodiment, repeated browsing of a same file can be avoided, and it is facilitated to improve the browsing efficiency.

In another embodiment, the electronic device may also display each first file group and each second file group in the display area based on preset display rules. In which, the preset display rules are based on file group information of the file groups, that the file group information includes one or more of following parameters: file group modification time, file group identification corresponding to the external device, file group keywords, and file creation time. Of course, technicians can adjust the parameters and a number of parameters included in the file group information according to specific scenarios, which is not limited here. It can be seen that in this embodiment, by displaying the file groups through the display rules, it is convenient for the user to browse files of the external device and related files in a unified manner, searching files is not needed, and the browsing efficiency is improved.

Method 2: displaying by areas. Referring to FIG. 15, the electronic device divides one interface of the display screen into multiple display areas. A number of the multiple display areas needs to be greater than or equal to a sum of the number of the first file group and the number of the second file group (corresponding to step 1501), and then respective file groups of the first file group and the second file group are displayed in corresponding display areas (corresponding to step 1502). Referring to FIG. 16, the electronic device divides an interface 1601 into at least two display areas 1602 and 1603, and other display areas are omitted and not shown. Then the second file group is displayed in the display area 1602 and the first file group is displayed in the display area 1603. The other display areas can display other content but do not participate in the display of the file groups. It can be seen that by dividing display areas, in this embodiment, it is convenient for the user to search for file groups or files in different display areas, and the time for searching files is reduced.

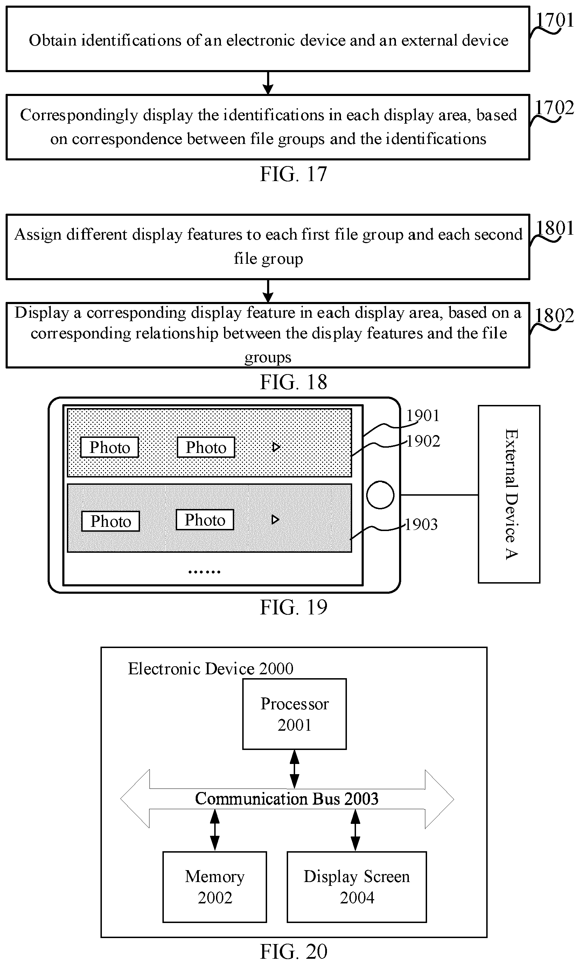

In one embodiment, referring to FIG. 17, the electronic device also obtains identifications of itself and the external device (corresponding to step 1701), and then correspondingly displays the identifications in each display area, based on correspondence between the file groups and the identifications. Continuing to refer to FIG. 16, the second file group is displayed in the first display area 1602, and the second file group corresponds to the external device A, so a logo "external device A" can be displayed in the display area 1602. The first file group is displayed in the second display area 1603, and the first file group corresponds to the application software SAMPLE APP of the electronic device, so a logo "SAMPLE APP" can be displayed in the display area 1603. It can be seen that, in this embodiment, by displaying each setting identification in each display area, it is convenient for the user to quickly determine each file group, and the time for searching files is reduced.

In another embodiment, referring to FIG. 18, the electronic device may assign different display features to each first file group and each second file group (corresponding to step 1801). Based on a corresponding relationship between the display features and the file groups, a corresponding display feature is displayed in each display area (corresponding to step 1802). Referring to FIG. 19, a display feature assigned to the first file group by the electronic device is a gray feature and a display feature assigned to the second file group is a dotted feature. Therefore, the electronic device displays the first file group and the second file group, at a same time, the gray feature and the dotted feature are also displayed in the corresponding display areas, with display effect shown in FIG. 19. Of course, the electronic device can also assign display features to the files themselves or the file names, so that the user can distinguish the file groups of different external devices. It is understandable that the display features assigned to different display areas or different files themselves or file names can also be display parameters such as different display colors, contrast, transparency, or saturation, or display text background, etc., which are not limited here. It can be seen that by setting the display features, it is convenient for the user to quickly determine each file group, and the time for searching files is reduced.

So far, in this embodiment, by monitoring the operations of browsing files in the external device by the user, the first file group stored in the external device and the second file group stored locally and related to the external device are obtained, and then the first file group and the second file group are simultaneously displayed in one interface of the display screen. It can be seen that, in this embodiment, by simultaneously displaying the files in the external device and the files stored locally and related to the external device, the user is not required to search files at different locations in the electronic device, it is facilitated to reduce the time for searching files by the user, and the file display experience of the user is improved.

FIG. 20 is a block diagram of an electronic device according to the embodiments of the present disclosure. Referring to FIG. 20, an electronic device 2000 includes a processor 2001, a memory 2002, a communication bus 2003, and a display screen 2004. The memory 2002 stores a plurality of computer instructions and files related to an external device. The processor 2001 is respectively connected to the memory 2002 and the display screen 2004 through the communication bus 2003, and is configured to read computer instructions from the memory 2002 to implement:
monitoring an operation of browsing files in the external device by a user;
when the operation is monitored, obtaining a first file group stored in the external device and a second file group stored locally and related to the external device; and
simultaneously displaying the first file group and the second file group in one interface of the display screen.

In one embodiment, a number of the external device may be one or more, a number of the first file group is equal to the number of the external device, and a number of the second file group is less than or equal to the number of the external device.

In one embodiment, that the processor 2001 is configured to simultaneously display the first file group and the second file group in the one interface of the display screen 2004 includes:
merging and displaying the first file group and the second file group in one display area of the one interface.

In one embodiment, the processor 2001 is configured to merge and display the first file group and the second file group in the one display area of the one interface:
comparing each file in the first file group with each file in the second file group; and
if all files are different, merging and displaying each file of the first file group and each file of the second file group in the one display area.

In one embodiment, two files being different indicates that the two files have different file names, or the two files have a same file name, but contain different file features.

In one embodiment, the file features include one or more of following parameters:
file content, file creation time, modification operation, storage location, or device information.

In one embodiment, after the processor 2001 is configured to compare each file in the first file group with each file in the second file group, it is further configured to:
if the first file group and the second file group contain same files, merge the same files; and
display the same files in single in the one display area.

In one embodiment, that the processor 2001 is configured to simultaneously display the first file group and the second file group in the one interface of the display screen includes:
dividing the one interface into multiple display areas, that a number of the display areas is greater than or equal to a sum of the number of the first file group and the number of the second file group; and
respectively displaying respective file groups in the first file group and the second file group in corresponding display areas.

In one embodiment, that the processor 2001 is configured to respectively display the respective file groups in the first file group and the second file group in the corresponding display areas includes:
obtaining identifications of the electronic device and the external device; and
based on correspondence between the respective file groups and the identifications, correspondingly displaying the identifications in each of the display areas.

In one embodiment, that the processor 2001 is configured to simultaneously display the first file group and the second file group in the one interface of the display screen includes:
assigning different display features to each of the first file group and each of the second file group; and
based on a corresponding relationship between the display features and the file groups, correspondingly displaying the display features in each of the display areas.

In one embodiment, that the processor 2001 is configured to simultaneously display the first file group and the second file group in the one interface of the display screen includes:
based on preset display rules, displaying each of the first file group and each of the second file group in the display areas.

In one embodiment, the display rules are based on file group information of the file groups, and the file group information includes one or more of following parameters: file group modification time, file group identification corresponding to the external device, file group keywords, and file creation time.

In one embodiment, the external device is a handheld gimbal.

In one embodiment, the electronic device is a mobile phone or a tablet computer.

The embodiments of the present disclosure also provide a machine-readable storage medium that can be configured on an electronic device. The machine-readable storage medium stores a plurality of computer instructions and files related to a connected external device. Following processing is performed when the computer instructions are executed:
steps of the file browsing method shown in FIG. 2 to FIG. 19.

It should be noted that in this specification, relational terms such as a first and a second, etc., are only used to distinguish one entity or operation from another entity or operation, and do not necessarily require or imply any such actual relationship or order among these entities or operations. Terms "include", "contain" or any other variations thereof are intended to cover non-exclusive inclusion, so that a process, a method, an article, or a device including a series of elements includes not only those elements, but also other elements that are not explicitly listed, or also elements inherent to such processes, methods, articles, or devices. If there are no more restrictions, an element defined by a sentence "including a..." does not exclude existence of other same elements in a process, a method, an article, or a device that includes the element.

The detection device and method provided by the embodiments of the present disclosure are described in detail above. Specific examples are used in the present disclosure to explain principles and implementations of the present disclosure. Descriptions of the above embodiments are only used to help understand the method of the present disclosure, and its core ideas. For those having ordinary skill in the art, according to the ideas of the present disclosure, there can be changes in specific implementations and application scopes. In summary, the content of this specification should not be construed as limiting the present disclosure.

## Claims

1. A file browsing method, **characterized in that**, the method is applied to an electronic device, the electronic device is connected to an external device, and the method includes:
obtaining a first index list of files stored in the external device, and a second index list of files stored locally and related to the external device;
processing the first index list and the second index list to obtain a third index list; and
displaying files corresponding to respective file indexes in the third index list.

2. The file browsing method according to claim 1, **characterized in that**, the files include at least multimedia files, and the multimedia files include videos or images.

3. The file browsing method according to claim 1, **characterized in that**, obtaining the first index list of files stored in the external device includes:
pulling a file system of the external device to obtain the first index list of files stored in the external device.

4. The file browsing method according to claim 1, **characterized in that**, when a number of the external device is more than one, obtaining the first index list of files stored in the external device includes:
obtaining an index list of each external device; and
processing multiple index lists into the first index list.

5. The file browsing method according to claim 4, **characterized in that**, processing the multiple index lists into the first index list includes:
generating an electronic device-external device file index corresponding to file information according to specified parameters of file information in each of the multiple index lists;
updating the corresponding file information based on the electronic device-external device file index to obtain an updated index list; and
processing multiple updated index lists into the first index list.

6. The file browsing method according to claim 5, **characterized in that**, the file information includes one or more of following parameters:
external device file index, file creation time, playback frame rate, video duration, video resolution, external device file GUID, external device photo mode, external device photo group index, and video type.

7. The file browsing method according to claim 1, **characterized in that**, obtaining the second index list of files stored locally and related to the external device includes:
obtaining an identification of the external device;
obtaining files stored locally and containing the identification, to obtain the files related to the external device; and
creating the second index list of files related to the external device.

8. The file browsing method according to claim 1, **characterized in that**, when the number of the external device is more than one, obtaining the second index list of files stored in the external device includes:
obtaining an index list of each of the external device; and
processing multiple index lists into the second index list.

9. The file browsing method of claim 8, **characterized in that**, processing the multiple index lists into the second index list includes:
generating an electronic device-external device file index corresponding to file information according to specified parameters of file information in each of the multiple index lists;
updating the corresponding file information based on the electronic device-external device file index to obtain an updated index list; and
processing multiple updated index lists into the second index list.

10. The file browsing method according to claim 1, **characterized in that**, displaying files corresponding to respective file indexes in the third index list includes:
determining an order of the respective file indexes in the third index list based on preset parameters; and
displaying the corresponding files according to the order of the respective file indexes.

11. The file browsing method of claim 1, **characterized in that**, the external device is a handheld gimbal.

12. The file browsing method of claim 1, **characterized in that**, the electronic device is a mobile phone or a tablet computer.

13. A file browsing method, **characterized in that**, the method is applied to an electronic device, the electronic device includes a display screen, and the method includes:
monitoring an operation of browsing files in an external device by a user;
when the operation is monitored, obtaining a first file group stored in the external device and a second file group stored locally and related to the external device; and
simultaneously displaying the first file group and the second file group in one interface of the display screen.

14. The file browsing method according to claim 13, **characterized in that**, a number of the external device is one or more, a number of the first file group is equal to the number of the external device, and a number of the second file group is less than or equal to the number of the external device.

15. The file browsing method according to claims 13 or 14, **characterized in that**, simultaneously displaying the first file group and the second file group in the one interface of the display screen includes:
merging and displaying the first file group and the second file group in one display area of the one interface.

16. The file browsing method according to claim 15, **characterized in that**, merging and displaying the first file group and the second file group in the one display area of the one interface includes:
comparing each file in the first file group with each file in the second file group; and
if all files are different, merging and displaying each file of the first file group and each file of the second file group in the one display area.

17. The file browsing method according to claim 16, **characterized in that**, two files being different indicate that the two files have different file names, or the two files have a same file name, but contain different file features.

18. The file browsing method according to claim 17, **characterized in that**, the file features include one or more of following parameters:
file content, file creation time, modification operation, storage location, or device information.

19. The file browsing method according to claim 16, **characterized in that**, after comparing each file in the first file group with each file in the second file group, the method further includes:
if the first file group and the second file group contain same files, merging the same files; and
displaying the same files in single in the one display area.

20. The file browsing method according to claims 13 or 14, **characterized in that**, simultaneously displaying the first file group and the second file group in the one interface of the display screen includes:
dividing the one interface into multiple display areas, wherein a number of the multiple display areas is greater than or equal to a sum of the number of the first file group and the number of the second file group; and
respectively displaying each file group of the first file group and the second file group in a corresponding display area.

21. The file browsing method according to claim 20, **characterized in that**, respectively displaying each file group of the first file group and the second file group in the corresponding display area includes:
obtaining identifications of the electronic device and the external device; and
based on correspondence between the file groups and the identifications, correspondingly displaying the identifications in each of the multiple display areas.

22. The file browsing method of claim 13, **characterized in that**, simultaneously displaying the first file group and the second file group in the one interface of the display screen includes:
assigning different display features to each of the first file group and each of the second file group; and
based on corresponding relationships between the display features and file groups, correspondingly displaying the display features in each of the multiple display areas.

23. The file browsing method according to claim 13 or 14, **characterized in that**, simultaneously displaying the first file group and the second file group in the one interface of the display screen includes:
based on preset display rules, displaying each of the first file group and each of the second file group in the display area.

24. The file browsing method according to claim 23, **characterized in that**, the display rules are based on file group information of file groups, and the file group information includes one or more of following parameters: file group modification time, file group identification corresponding to the external device, file group keywords, and file creation time.

25. The file browsing method according to claim 11, **characterized in that**, the external device is a handheld gimbal.

26. The file browsing method according to claim 11, **characterized in that**, the electronic device is a mobile phone or a tablet computer.

27. An electronic device, **characterized in that**, the device includes:
a processor;
a memory; and
a communication bus, wherein the memory stores a plurality of computer instructions and files related to an external device, and the processor is connected to the memory through the communication bus, to read the plurality of computer instructions in the memory to implement:
obtaining a first index list of files stored in the external device, and a second index list of files stored locally and related to the external device;
processing the first index list and the second index list to obtain a third index list; and
displaying files corresponding to respective file indexes in the third index list.

28. The electronic device according to claim 27, **characterized in that**, the files includes at least multimedia files, and the multimedia files include videos or images.

29. The electronic device according to claim 27, **characterized in that**, that the processor is configured to obtain the first index list of files stored in the external device includes:
pulling a file system of the external device to obtain the first index list of files stored in the external device.

30. The electronic device according to claim 27, **characterized in that**, when a number of the external device is more than one, that the processor is configured to obtain the first index list of files stored in the external device includes:
obtaining an index list of each of the external device; and
processing multiple index lists into the first index list.

31. The electronic device according to claim 30, **characterized in that**, that the processor is configured to process the multiple index lists into the first index list includes:
generating an electronic device-external device file index corresponding to file information according to specified parameters of the file information in each of the multiple index lists;
updating the corresponding file information based on the electronic device-external device file index to obtain an updated index list; and
processing multiple updated index lists into the first index list.

32. The electronic device according to claim 31, **characterized in that**, the file information includes one or more of following parameters:
external device file index, file creation time, playback frame rate, video duration, video resolution, external device file GUID, external device photo mode, external device photo group index, and video type.

33. The electronic device according to claim 27, **characterized in that**, that the processor is configured to obtain the second index list of files stored locally and related to the external device includes:
obtaining an identification of the external device;
obtaining files stored locally that contain the identification, to obtain the files related to the external device; and
creating the second index list of files related to the external device.

34. The electronic device according to claim 27, **characterized in that**, when the number of the external device is more than one, that the processor is configured to obtain the second index list of files stored in the external device includes:
obtaining an index list of each of the external device; and
processing multiple index lists into the second index list.

35. The electronic device according to claim 34, **characterized in that**, the processor processing the multiple index lists into the second index list includes:
generating an electronic device-external device file index corresponding to file information according to specified parameters of the file information in each of the multiple index lists;
updating the corresponding file information based on the electronic device-external device file index to obtain an updated index list; and
processing multiple updated index lists into the second index list.

36. The electronic device according to claim 27, **characterized in that**, that the processor is configured to display files corresponding to respective file indexes in the third index list includes:
determining an order of the respective file indexes in the third index list based on preset parameters; and
displaying corresponding files according to the order of the respective file indexes.

37. The electronic device according to claim 27, **characterized in that**, the external device is a handheld gimbal.

38. The electronic device according to claim 27, **characterized in that**, the electronic device is a mobile phone or a tablet computer.

39. An electronic device, **characterized in that**, the device includes:
a processor;
a memory;
a display screen; and
a communication bus, wherein the memory stores a plurality of computer instructions and files related to an external device, and the processor is respectively connected to the memory and the display screen through the communication bus, to read the plurality of computer instructions from the memory to implement:
monitoring an operation of browsing files in the external device by a user;
when the operation is monitored, obtaining a first file group stored in the external device and a second file group stored locally and related to the external device; and
simultaneously displaying the first file group and the second file group in one interface of the display screen.

40. The electronic device according to claim 39, **characterized in that**:
a number of the external device is one or more, a number of the first file group is equal to the number of the external device, and a number of the second file group is less than or equal to the number of the external device.

41. The electronic device according to claims 39 or 40, **characterized in that**, that the processor is configured to simultaneously display the first file group and the second file group in the one interface of the display screen includes:
merging and displaying the first file group and the second file group in one display area of the one interface.

42. The electronic device according to claim 41, **characterized in that**, that the processor is configured to merge and display the first file group and the second file group in the one display area of the one interface:
comparing each file in the first file group with each file in the second file group; and
if all files are different, merging and displaying each file of the first file group and each file of the second file group in the one display area.

43. The electronic device according to claim 42, **characterized in that**, two files two files being different indicates that the two files have different file names, or the two files have a same file name, but contain different file features.

44. The electronic device according to claim 43, **characterized in that**, the file features include one or more of following parameters:
file content, file creation time, modification operation, storage location, or device information.

45. The electronic device according to claim 42, **characterized in that**, after the processor is configured to compare each file in the first file group with each file in the second file group, the processor is also configured to:
if the first file group and the second file group contain same files, merge the same files; and
display the same files in single in the one display area.

46. The electronic device according to claims 40 or 41, **characterized in that**, that the processor is configured to simultaneously display the first file group and the second file group in the one interface of the display screen includes:
dividing the one interface into multiple display areas, wherein a number of the multiple display areas is greater than or equal to a sum of the number of the first file group and the number of the second file group; and
respectively displaying respective file groups in the first file group and the second file group in corresponding display areas.

47. The electronic device according to claim 46, **characterized in that**, that the processor is configured to display the respective file groups in the first file group and the second file group in the corresponding display areas includes:
obtaining identifications of the electronic device and the external device; and
based on correspondence between the respective file groups and the identifications, correspondingly displaying the identifications in each of the multiple display areas.

48. The electronic device according to claim 40, **characterized in that**, that the processor is configured to simultaneously display the first file group and the second file group in the one interface of the display screen includes:
assigning different display features to each of the first file group and each of the second file group; and
based on corresponding relationships between the display features and file groups, correspondingly displaying the display features in each of the display areas.

49. The electronic device according to claims 40 or 41, **characterized in that**, that the processor is configured to simultaneously display the first file group and the second file group in the one interface of the display screen includes:
based on preset display rules, displaying each of the first file group and each of the second file group in the display areas.

50. The electronic device according to claim 49, **characterized in that**, the display rules are based on file group information of file groups, and the file group information includes one or more of following parameters: file group modification time, file group identification corresponding to the external device, file group keywords, and file creation time.

51. The electronic device according to claim 40, **characterized in that**, the external device is a handheld gimbal.

52. The electronic device according to claim 40, **characterized in that**, the electronic device is a mobile phone or a tablet computer.

53. A machine-readable storage medium, **characterized in that**, the machine-readable storage medium stores a plurality of computer instructions and files related to a connected external devices, and when the plurality of computer instructions are executed, steps of any of the methods according to claims 1 to 26 are implemented.
